# EUROPÄISCHE PATENTANMELDUNG

(11) **EP 2 873 778 A1**
(43) Veröffentlichungstag der Anmeldung: **20.05.2015**
(21) Anmeldenummer: 13192671.9
(22) Anmeldetag: 13.11.2013
(51) Int. Cl.: E04B 1/41, E04B 2/86, F16B 37/04

(54) **Verbindungsanordnung und Verbindungssystem für Betonfertigteile**

(71) Anmelder: PreConTech Precast Concrete Technology e.K., 65468 Trebur (DE)
(72) Erfinder: Rausch, Dieter, 65468 Trebur (DE)
(74) Vertreter: Weilnau, Carsten

(57) **Zusammenfassung**

Die vorliegende Erfindung betrifft ein Verbindungsanordnung zum Verbinden von zumindest zwei, jeweils mit zumindest einer Ankerschiene (11, 12) versehenen Betonfertigteilen (1, 2), wobei die Verbindungsanordnung (10) einen längserstreckten Schaft (30) mit einem an einem ersten Längsende (32) angeordneten und gegenüber dem Schaftdurchmesser (33) verbreiterten ersten Kopf (36) sowie an einem zweiten Längsende (34) des Schafts (30), welches dem ersten Längsende (32) gegenüberliegt, einen gegenüber dem Schaftdurchmesser (33) verbreiterten zweiten Kopf (38) aufweist. Des Weiteren betrifft die Erfindung ein hierauf aufbauendes Verbindungssystem, eine hiermit gebildete Betonfertigteilanordnung sowie ein entsprechendes Verfahren zum Verbinden von zumindest zwei Betonfertigteilen.

## Beschreibung

### Technisches Gebiet

Die vorliegende Erfindung betrifft eine Verbindungsanordnung sowie ein Verbindungssystem zum Verbinden von zumindest zwei Betonfertigteilen. Darüber hinaus betrifft die Erfindung eine zumindest zwei Betonfertigteile umfassende Betonfertigteilanordnung, deren Betonfertigteile mittels des Verbindungssystems miteinander verbunden sind. Zudem betrifft die Erfindung ein Verfahren zum Verbinden von Betonfertigteilen.

### Hintergrund

Die Verwendung vorkonfigurierter bzw. maßgefertigter Betonfertigteile, insbesondere von Stahlbetonwand- oder Deckenelementen ist für die effiziente und zügige Errichtung von Bauwerken weit verbreitet. Für die Errichtung von Betonwänden finden vielfach Doppelwandelemente Verwendung, die einen mehrschaligen, insbesondere zweischaligen Aufbau aufweisen. Typischerweise sind hierbei zwei Betonschalen unter Bildung eines zwischen den Schalen liegenden Hohlraums über Gitterträger oder dergleichen Verbindungsmittel miteinander verbunden. Solch vorgefertigte Doppelwandelemente werden mittels geeigneter Hebezeuge, wie zum Beispiel Kränen, auf einer Baustelle positioniert. Der zwischen den Schalen liegende Hohlraum wird nach einer Installation sämtlicher Doppelwandelemente einer Gebäudewand mit Ort- oder Transportbeton verfüllt. Anstelle zwei- oder mehrschaliger Betonfertigteile können auch massive Wandteile, so etwa als Nullwand ausgestaltete Betonfertigteile für die Errichtung von Wänden Verwendung finden. Nullwände weisen typischerweise einen massiven und weitgehend hohlraumfreien Aufbau auf.

Für die Installation und Montage mehrerer aneinander angrenzender Wandelemente auf Basis von Betonfertigteilen ist es erforderlich, die einzelnen Betonfertigteile jeweils gesondert zu positionieren und gegen Umfallen zu sichern. Die sich unweigerlich zwischen aneinander angrenzenden Betonfertigteilen bildende Fuge ist dann beidseits mit einer Schalung zu versehen. Die Fuge, welche eine Fugenbreite im Bereich von 10 cm und mehr aufweisen kann, ist mit einer Füllmasse, ggf. auch mit Ortbeton gesondert zu verfüllen.

Demgegenüber liegt nun die Aufgabe zugrunde, eine Verbindungsanordnung bzw. ein Verbindungssystem zur Verfügung zu stellen, welches eine einfache und sichere wechselseitige Verbindung aneinander angrenzender Betonfertigteile, insbesondere von Wand-Betonfertigteilen ermöglicht. Die Verbindungsanordnung und das Verbindungssystem soll hierbei die aneinander angrenzenden bzw. benachbart zueinander angeordneten Betonfertigteile lastübertragend miteinander koppeln. Das Verbindungssystem soll zudem eine intuitive, zügige und sichere Verbindung benachbarter Betonfertigteile ermöglichen und zu einer Reduzierung des Fugenmaßes beitragen.

### Erfindung und vorteilhafte Ausgestaltungen

Diese Aufgabe wird mit einer Verbindungsanordnung gemäß dem unabhängigen Patentanspruch 1, mit einem Verbindungssystem gemäß Patentanspruch 9, einer Betonfertigteilanordnung nach Patentanspruch 14 sowie mit einem Verfahren gemäß Patentanspruch 15 gelöst. Vorteilhafte Ausgestaltungen sind dabei jeweils Gegenstand abhängiger Patentansprüche.

Es ist insoweit eine Verbindungsanordnung zum Verbinden von zumindest zwei, jeweils mit zumindest einer Ankerschiene versehenen Betonfertigteilen vorgesehen. Die Verbindungsanordnung weist dabei einen längserstreckten Schaft mit einem an einem ersten Längsende des Schafts angeordneten und gegenüber dem Schaftdurchmesser verbreiterten ersten Kopf auf. An einem zweiten Längsende des Schafts, welches dem ersten Längsende gegenüberliegt, weist die Verbindungsanordnung einen gegenüber dem Schaftdurchmesser verbreiterten zweiten Kopf auf.

Die Verbindungsanordnung ist mit ihrem ersten Kopf in die erste, an einem ersten Betonfertigteil verankerte Ankerschiene einführbar. Die Verbindungsanordnung ist ferner mit ihrem zweiten Kopf in eine zweite Ankerschiene einführbar, welche an einem zweiten Betonfertigteil verankert, bzw. in dem zweiten Betonfertigteil eingebettet ist. Der längserstreckte Schaft der Verbindungsanordnung erstreckt sich alsdann in Montagestellung am ersten und zweiten Betonfertigteil, bzw. an deren ersten und zweiten Ankerschiene zwischen den beiden Ankerschienen. Dadurch, dass der erste und der zweite Kopf typischerweise jeweils erste und zweite, jeweils nach innen ragende Schenkelabschnitte von erster und zweiter Ankerschiene hintergreifen, kann die Verbindungsanordnung zumindest eine zugstabile Verbindung von erstem und zweiten Betonfertigteil bereitstellen.

Zumindest einer von erstem und zweitem Kopf ist fest bzw. einstückig mit dem Schaft der Verbindungsanordnung verbunden. Der andere Kopf kann ebenfalls fest oder starr mit dem Schaft verbunden sein. Es ist dabei auch denkbar, dass der andere, bzw. der zweite Kopf verstellbar und arretierbar am Schaft angeordnet ist. Durch die Verstellbarkeit zumindest eines der beiden Köpfe entlang der Längsrichtung des Schafts, kann die axiale Ausdehnung der Verbindungsanordnung innerhalb vorgegebener Grenzen variiert werden. Die Verbindungsanordnung kann somit auf unterschiedliche Spaltmaße und Fugengeometrien zwischen benachbart angeordneten Betonfertigteilen angepasst werden.

Nach einer Weiterbildung ist vorgesehen, dass zumindest einer von erstem und zweitem Kopf in einer senkrecht zum Schaft verlaufenden Querschnittsebene eine Länge (I) aufweist, die größer ist als eine sich hierzu senkrecht in der Querschnittsebene erstreckende Breite (b). Insbesondere kann der Kopf in der senkrecht zum Schaft verlaufenden Querschnittsebene eine rechteckige oder dreieckige Geometrie aufweisen, die das Einführen des Kopfs in die Ankerschiene in einer ersten vorgegebenen Ausrichtung ermöglicht.

Nach einem Einführen eines Kopfs in eine entsprechende Ankerschiene kann zum Beispiel durch Drehen des Kopfs bezüglich einer mit der Längsachse des Schafts zusammenfallenden Drehachse der Kopf innerhalb der Ankerschiene gedreht werden, sodass dieser bezüglich einer im Wesentlichen in Längsrichtung des Schafts verlaufenden Axialrichtung gegenüber der betreffenden Ankerschiene fixierbar ist. So ist insbesondere denkbar, dass zumindest einer der beiden Köpfe, zum Beispiel eine rechteckige Querschnittsgeometrie aufweist, deren Breite schmaler ist als die lichte Weite eines Führungsschlitzes der Ankerschiene.

In einer entlang des Führungsschlitzes der Ankerschiene orientierten ersten Ausrichtung kann der betreffende Kopf in die Ankerschiene eingeführt, mithin durch den Führungsschlitz der Ankerschiene hindurchgeführt und anschließend um einen vorgegebenen Winkel mit dem Schaft als Drehachse gedreht werden. Bei einem rechteckig ausgestalteten Kopf kann der Kopf etwa um 90° gedreht werden. Die Längsenden des Kopfes gelangen dabei in einen Hinterschneidungsbereich der Ankerschiene, sodass der Kopf zumindest hinsichtlich einer Zugbelastung gegenüber der Ankerschiene gesichert ist.

Abweichend von einer zum Beispiel rechteckigen oder dreieckigen Querschnittsgeometrie ist aber auch denkbar, dass zumindest einer von erstem und zweitem Kopf eine radialsymmetrische, etwa eine kreisrunde oder ovale Querschnittsgeometrie aufweist. Darüber hinaus sind auch quadratische Querschnittsgeometrien des Kopfs senkrecht zum Schaft denkbar. Für das Verbinden der zumindest zwei Betonfertigteile ist es grundsätzlich ausreichend, wenn wenigstens einer der Köpfe der Verbindungsanordnung eine, bezogen auf den radialen Schaftmittelpunkt asymmetrische Querschnittsgeometrie aufweist. Das heißt, die Querschnittskontur des zumindest einen Kopfs der Verbindungsanordnung ist, bezogen auf das radiale Zentrum des Schafts bzw. bezogen auf die vom Schaft gebildete Drehachse nicht rotations- oder punktsymmetrisch, sondern allenfalls spiegelsymmetrisch bezüglich einer durch den Schaftmittelpunkt verlaufenden gedachten Querschnittslinie.

Der andere Kopf der Verbindungsanordnung kann demgegenüber eine symmetrische, auch radialsymmetrische oder punktsymmetrische Querschnittskontur aufweisen. In diesem Fall sind die gegenüberliegenden ersten und zweiten Köpfe der Verbindungsanordnung unterschiedlich ausgestaltet. Eine gleichartige Geometrie beider Köpfe ist hingegen insbesondere dann vorgesehen, wenn beide Köpfe eine von einer Radial- oder Punktsymmetrie abweichende Querschnittskontur aufweisen.

Nach einer weiteren Ausgestaltung ist zumindest einem der Köpfe ein entlang dem Schaft verschiebbares Abstützelement zugeordnet. Auch können beide Köpfe jeweils mit einem Abstützelement versehen sein. Das Abstützelement weist typischerweise eine Radialerstreckung auf, die mit der senkrecht zum Schaft verlaufenden Querschnittsebene des betreffenden Kopfs korrespondiert.

Typischerweise erstreckt sich das Abstützelement in radialer Richtung über die Länge (I) des jeweils zugeordneten Kopfs. Das Abstützelement kann eine radialsymmetrische Kontur aufweisen. Unabhängig von seiner geometrischen Ausgestaltung verbleibt das Abstützelement in einer Endmontagestellung außerhalb der betreffenden Ankerschiene und stützt sich axial, das heißt in Längsrichtung des Schafts an der jeweiligen Ankerschiene ab. Mittels dem entlang des Schafts verschiebbaren Abstützelements können nicht nur Zug-, sondern auch Druckkräfte zwischen den Ankerschienen bzw. zwischen den die Ankerschienen aufweisenden Betonfertigteilen übertragen werden.

Indem das Abstützelement eine vergleichsweise große Abstützfläche aufweist, kann es sich dementsprechend großflächig an der Ankerschiene abstützen und somit dazu beitragen, etwaige Punktbelastungen zwischen Verbindungsanordnung und Ankerschiene zu reduzieren. Das Abstützelement trägt insoweit zu einer gleichmäßigen bzw. räumlich gleich verteilten Kraftverteilung zwischen Ankerschiene und Schaft bei.

Nach einer weiteren Ausgestaltung ist das zumindest eine Abstützelement als Scheibe mit einem Durchgangsloch zur Aufnahme des Schafts ausgebildet. Insoweit kann das Abstützelement etwa in Form einer Unterlegscheibe ausgestaltet sein, deren Durchgangsloch vom Schaft durchsetzt ist. Das Abstützelement ist dabei radial am Schaft befestigt, kann aber axial, das heißt in Schaftlängsrichtung, entlang des Schafts beweglich angeordnet sein.

Nach einer weiteren Ausgestaltung weist die Verbindungsanordnung zumindest ein entlang dem Schaft bewegliches und am Schaft fixierbares Fixierelement auf. Das Fixierelement kann dabei insbesondere mit dem Abstützelement zusammenwirken. Es ist insbesondere denkbar, dass die Verbindungsanordnung jeweils zwei Abstützelemente als auch jeweils zwei Fixierelemente aufweist, die jeweils dem ersten und dem zweiten Kopf gesondert zugeordnet sind. Der erste Kopf markiert typischerweise das erste Längsende der Verbindungsanordnung. Axial hieran angrenzend ist beispielsweise ein erstes Abstützelement am Schaft angeordnet. Axial angrenzend, das heißt an der dem ersten Kopf abgewandten Seite des Abstützelements ist typischerweise das erste Fixierelement am Schaft anordenbar. Auf der gegenüberliegenden Seite der Verbindungsanordnung kann eine dementsprechende Anordnung von axial innen nach axial außen vorgesehen sein.

Axial benachbart zum ersten Fixierelement kann ein zweites Fixierelement vorgesehen sein. An der dem ersten Fixierelement abgewandten Seite des zweiten Fixierelements kann das zweite Abstützelement am Schaft vorgesehen werden. Das zweite Längsende des Schafts kann alsdann mit dem zweiten Kopf versehen sein. Die Anordnung der einzelnen Komponenten der Verbindungsanordnung kann insoweit folgenden axialen Aufbau aufweisen: erster Kopf, erstes Abstützelement, erstes Fixierelement, zweites Fixierelement, zweites Abstützelement, zweiter Kopf.

Mittels dem am Schaft axial fixierbaren Fixierelement kann eine klemmende wechselseitige Befestigung von Verbindungsanordnung und zumindest einer Ankerschiene herbeigeführt werden. So ist denkbar, dass die den Schaft der Verbindungsanordnung zumindest bereichsweise umschließenden Schenkel der Ankerschiene axial zwischen zum Beispiel dem ersten Kopf und dem ersten Abstützelement einklemmbar sind. Je nach Ausgestaltung der Verbindungsanordnung kann selbiges auch für die Anordnung und Befestigung der Verbindungsanordnung an der zweiten Ankerschiene vorgesehen sein.

Nach einer weiteren Ausgestaltung ist das zumindest eine Fixierelement als Schraubenmutter ausgebildet. Dabei ist insbesondere von Vorteil, wenn der

Schaft zumindest bereichsweise mit einem Außengewinde versehen ist, welches mit dem Innengewinde des als Schraubenmutter ausgebildeten Fixierelements zusammenwirkt.

Die Schraubenmutter kann eine äußere Schlüsselfläche aufweisen oder aber auch als Flügelmutter ausgebildet sein. Somit kann entweder unter Zuhilfenahme eines Werkzeuges eine axiale und/oder auch bezogen auf die Längserstreckung des Schafts radiale Fixierung der Verbindungsanordnung an zumindest einer Ankerschiene erfolgen. Insbesondere bei Ausgestaltung einer Flügelmutter ist sogar eine werkzeugfreie Montage oder Vormontage der Verbindungsanordnung an einer Ankerschiene eines Betonfertigteils denkbar.

Nach einer weiteren Ausgestaltung ist dem ersten Kopf ein erstes Abstützelement mit einem ersten Fixierelement zugeordnet und dem zweiten Kopf ist ein zweites Abstützelement mit einem zweiten Fixierelement zugeordnet. Auf diese Art und Weise können beide Köpfe, sowohl axial als auch radial an der Ankerschiene befestigt werden. Es kann hierdurch eine axiale als auch radiale wechselseitige Sicherung und Befestigung der mit betreffenden Ankerschienen versehenen und benachbart zueinander angeordneten Betonfertigteile bereitgestellt werden.

Es ist hierdurch insbesondere eine mechanische lastenübertragende Verbindung benachbart zueinander positionierter Betonfertigteile realisierbar, sodass zum Beispiel die für einen Wandaufbau vorgesehenen und nebeneinander positionierten Betonfertigteile nicht jeweils gesondert gegen Umfallen mehr zu sichern sind. Je nach Größe, Anzahl und mechanischer Belastbarkeit der Verbindungsanordnung ist denkbar, dass zum Beispiel nur noch ein einziges oder einzelne ausgewählte Wandelemente gesondert gegen Umfallen zu sichern sind, während hieran angrenzende oder dazwischen befindliche Wandelemente ausschließlich über die Verbindungsanordnung sicher in ihrer aufgestellten Position gehalten werden. Für derartige Wandelemente müssen insoweit keine gesonderten Stützen oder Absicherungsmaßnahmen getroffen werden, sodass der Montageaufwand dementsprechend reduziert werden kann.

Nach einer weiteren Ausgestaltung ist der Schacht der Verbindungsanordnung zug- und druckstabil ausgebildet. Der Schaft ist insbesondere verwindungssteif ausgestaltet. Er kann zum Beispiel in Form eines Metallbolzens ausgebildet sein. Auch kann der Schaft aus einem hochfesten Material, wie zum Beispiel Stahl, insbesondere verzinktem Stahl oder aus Edelstahl gefertigt sein. Die zug- und druckstabile Ausgestaltung des Schafts als auch die feste Verbindung der Köpfe am Schaft ermöglicht eine Übertragung von Zug- und Druckkräften zwischen Betonfertigteilen, die mittels zumindest einer zuvor beschriebenen Verbindungsanordnung miteinander zug- und druckfest verbunden sind.

Eine druckstabile bzw. druckfeste Verbindung zwischen den Betonfertigteilen kann insbesondere dann erreicht werden, wenn beide Köpfe der Verbindungsanordnung mittels erstem und zweitem Abstützelement als auch mittels erstem und zweitem Fixierelement jeweils axial und somit auch radial bzw. bezüglich ein der Längserstreckung der betreffenden Ankerschienen fixiert sind.

In einem weiteren Aspekt betrifft die Erfindung ferner ein Verbindungssystem zum Verbinden von zumindest zwei Betonfertigteilen. Das Verbindungssystem weist eine in oder an einem ersten Betonfertigteil verankerbare erste Ankerschiene sowie eine zweite Ankerschiene auf, die gleichermaßen in oder an einem zweiten Betonfertigteil verankerbar ist. Des Weiteren weist das Verbindungssystem zumindest eine zuvor beschriebene Verbindungsanordnung auf, deren erster Kopf in die erste Ankerschiene einführbar ist und deren zweiter Kopf in die zweite Ankerschiene einführbar ist.

Es ist hierbei insbesondere vorgesehen, dass die Verbindungsanordnung zum Beispiel mit ihrem ersten Kopf in der ersten Ankerschiene vormontierbar ist. Der erste Kopf kann beispielsweise bereits vor oder während der Verankerung der Ankerschiene im oder am ersten Betonfertigteil in die erste Ankerschiene eingeführt werden. Es ist aber auch denkbar, dass die Verbindungsanordnung mit ihrem ersten Kopf nach oder während einer Montage bzw. nach oder während einem Aufstellen des ersten Betonfertigteils in die erste Ankerschiene einführbar und bevorzugt an einer vorgegebenen Position an der ersten Ankerschiene vorübergehend fixierbar ist.

Insoweit kann das erste Betonfertigteil vor oder nach einem Erreichen einer bauseitigen Montageposition mit der Verbindungsanordnung versehen werden. Das Einführen des zweiten Kopfs der Verbindungsanordnung erfolgt nach einem hiernach erfolgenden bauseitigen Positionieren des zweiten Betonfertigteils. Erste und zweite Ankerschiene sind jeweils an vorgegebenen und in Endmontagestellung einander zugewandten Positionen von erstem und zweitem Betonfertigteil angeordnet, sodass der zweite Kopf der Verbindungsanordnung unmittelbar nach Positionieren des zweiten Betonfertigteils in die zweite Ankerschiene einführbar ist.

Nach einer Weiterbildung hiervon weisen die erste Ankerschiene und die zweite Ankerschiene jeweils einen sich zwischen zwei nach innen ragenden Schenkelabschnitten erstreckenden Führungsschlitz auf. Die Breite jenes Führungsschlitzes, das heißt die Erstreckung, bzw. die lichte Weite des Schlitzes senkrecht zur Längsrichtung der Ankerschiene ist dabei kleiner als ein Querschnitt des ersten und des zweiten Kopfs der Verbindungsanordnung. Insbesondere ist vorgesehen, dass bei einem etwa rechteckig ausgestalteten Kopf die Schlitzbreite des Führungsschlitzes der betreffenden Ankerschiene kleiner ist als die lange Seite des rechteckigen Kopfs.

Hierbei kann gleichermaßen vorgesehen sein, dass die Schlitzbreite (s) jedoch größer ist als die kurze Seite, mithin die Breite (b) des Kopfs. Auf diese Art und Weise kann erreicht werden, dass zum Beispiel der rechteckig ausgestaltete erste Kopf in einer Ausrichtung parallel zur Längserstreckung der Ankerschiene bzw. parallel zur Schlitzerstreckung in den Schlitz und somit in die Ankerschiene einführbar ist und mit Erreichen einer axialen Einführ- oder Montageposition um einen vorgegebenen Winkel um den Schaft drehbar ist. Ein entgegen der Einführrichtung gerichtetes Herausziehen des Kopfs und somit der Verbindungsanordnung aus der ersten Ankerschiene ist dabei blockiert und verhindert. Die Verbindungsanordnung kann insoweit axial an der ersten Ankerschiene fixiert sein.

Nach einer weiteren Ausgestaltung weist der Führungsschlitz der zweiten Ankerschiene an zumindest einem Abschnitt eine Schlitzverbreiterung auf, deren Breite (v) größer ist als ein Querschnitt des zweiten Kopfs. Die Schlitzverbreiterung ist insbesondere derart breit, dass der zweite Kopf in jedweder Orientierung in Axialrichtung durch die Schlitzverbreiterung hindurchführbar ist. Jenes Hindurchführen durch die Schlitzverbreiterung kann insbesondere während der Montage des zweiten Betonfertigteils erfolgen. Sobald das zweite Betonfertigteil eine in Bezug auf das erste Betonfertigteil vorgesehene Endmontageposition erreicht, kann der zweite Kopf der Verbindungsanordnung bereits die Schlitzverbreiterung des Führungsschlitzes in Axialrichtung durchsetzt haben.

Mit Erreichen einer derartigen Montagestellung kann die Verbindungsanordnung alsdann in Längsrichtung beider Ankerschienen, welche typischerweise parallel zueinander verlaufen, bewegt werden, sodass der zweite Kopf aus der Schlitzverbreiterung heraus in einen gegenüber der Schlitzverbreiterung verjüngten oder verkleinerten Führungsschlitz zu liegen kommt, in welchem auch der zweite Kopf axial an der zweiten Ankerschiene, mithin am zweiten Betonfertigteil fixierbar ist.

Durch Vorsehen einer Schlitzverbreiterung im Führungsschlitz der zweiten Ankerschiene kann ein Einführen und Befestigen des zweiten Kopfs der Verbindungsanordnung an der zweiten Ankerschiene erfolgen, ohne dass hierfür die Verbindungsanordnung bzw. ihr zweiter Kopf gedreht oder verschwenkt werden müsste. Eine axiale Sicherung kann hierbei allein durch eine Längsverschiebung der Verbindungsanordnung entlang der Längsrichtung beider Ankerschienen erfolgen, wobei der zweite Kopf der Verbindungsanordnung aus der Schlitzverbreiterung heraus in einen gegenüber der Schlitzverbreiterung verjüngten Führungsschlitz übergeht, in welcher der zweite Kopf die den Führungsschlitz bildenden Schenkel der zweiten Ankerschiene hintergreift.

Nach einer weiteren Ausgestaltung ist die Schlitzverbreiterung der zweiten Ankerschiene an einem Längsende der zweiten Ankerschiene ausgebildet. die erste und die zweite Ankerschiene sind, bezogen auf die spätere Endmontageposition, betreffender erster und zweiter Betonfertigteile parallel zueinander in dem ersten bzw. dem zweiten Betonfertigteil angeordnet bzw. verankert. Es ist ferner denkbar und von Vorteil, wenn erste und zweite Ankerschiene auch auf gleicher Höhe, bzw. in Verbindungsrichtung betrachtet, im Wesentlichen überdeckend zueinander am ersten und am zweiten Betonfertigteil angeordnet sind.

Es ist insbesondere vorgesehen, dass bei als Wandelementen ausgestalteten Betonfertigteilen die Schlitzverbreiterung der zweiten Ankerschiene an einem oberen Längsende der Ankerschiene ausgebildet ist. Auf diese Art und Weise kann ein Längsverschieben der Verbindungsanordnung in der ersten und der zweiten Ankerschiene schwerkraftbedingt bzw. schwerkraftunterstützt erfolgen. Montagetechnisch kann dabei insbesondere vorgesehen sein, dass die Verbindungsanordnung an einem oberen Endabschnitt der ersten Ankerschiene lösbar vormontiert ist.

Das obere Ende der ersten Ankerschiene kann ferner einen definierten Endanschlag für die Positionierung der Verbindungsanordnung an der ersten Ankerschiene bereitstellen. Sobald das zweite, mit der zweiten hiermit korrespondierend ausgestalteten Ankerschiene in Montageposition verbracht ist, kann die Arretierung der Verbindungsanordnung an der ersten Ankerschiene gelöst werden, sodass die Verbindungsanordnung mit beiden Ankerschienen in Eingriff stehend lediglich herunterfällt, bis sie an einem unteren Ende der ersten und zweiten Ankerschiene zu liegen kommt.

In jener Position, in welcher die erste Ankerschiene vom ersten Kopf hintergriffen und in welcher die zweite Ankerschiene vom zweiten Kopf hintergriffen ist, ergibt sich auch ohne jegliche weitere gesonderte Fixierung der Verbindungsanordnung an einer der Ankerschienen bereits eine axiale und wechselseitige Sicherung von erstem und zweitem Betonfertigteil; dies jedoch innerhalb der Bauteiltoleranzen und des geometrischen Spiels von erstem und/oder zweitem Kopf in der ersten und/oder zweiten Ankerschiene.

Nach einer weiteren Ausgestaltung ist die Verbindungsanordnung mit zumindest einem ihrer Köpfe an der ersten und/oder an der zweiten Ankerschiene fixierbar. Insbesondere wenn die Verbindungsanordnung mit zumindest einem Abstützelement und einem mit dem Abstützelement zusammenwirkenden Fixierelement versehen ist, kann nicht nur eine zug-, sondern auch eine druckstabile bzw. zug- und/oder druckübertragende Verbindung zwischen den Betonfertigteilen realisiert werden.

Zur Bildung einer besonders verwindungssteifen und unmittelbar kraft- und spielfrei übertragenden Verbindung von erstem und zweitem Betonfertigteil kann mit Erreichen jener Endmontageposition vorgesehen werden, den ersten als auch den zweiten Kopf jeweils unter Zuhilfenahme von erstem und zweitem Abstützelement sowie erstem und zweitem Fixierelement in Axialrichtung als auch bezüglich der Längsrichtung der Ankerschiene bzw. bezüglich der Radialrichtung des Schafts an den Ankerschienen zu fixieren.

Die so gebildete und unweigerlich noch existierende Fuge zwischen den benachbarten Betonfertigteilen kann alsdann mit Gießmasse ausgefüllt, ggf. auch ohne Schalung ausgespritzt werden.

Die Verwendung der Verbindungsanordnung mit zwei gegenüberliegenden, typischerweise als Hammerkopf ausgestalten Köpfen, ermöglicht die Realisierung von besonders kleinen Fugen, die weniger als 5 cm, weniger als 3 cm oder sogar weniger als 2 cm. In besonders vorteilhafter Ausgestaltung können Fugen von 10 bis 15 mm Fugenbreite zwischen den flächig aneinander angrenzenden Betonfertigteilen realisiert werden. Derart kleine Fugen können unter Umständen auch ohne Bereitstellung einer gesonderten Schalung lediglich ausgespritzt werden. Als Füllmaterial kommen hierfür insbesondere thixotrope Mörtel infrage.

Nach einem weiteren Aspekt betrifft die Erfindung ferner eine Betonfertigteilanordnung mit zumindest einem ersten Betonfertigteil und mit einem zweiten Betonfertigteil. Die beiden Betonfertigteile, typischerweise zwei Wandelemente, sind dabei mittels zumindest eines zuvor beschriebenen Verbindungssystems miteinander verbunden. Das erste Betonfertigteil weist dabei typischerweise an einer vorgegebenen Stelle, insbesondere an einer dem zweiten Betonfertigteil zugewandten Seite, zumindest eine erste Ankerschiene auf. Das zweite Betonfertigteil weist dementsprechend an einer dem ersten Betonfertigteil in Endmontagestellung zugewandten Seite eine zweite Ankerschiene auf.

Die beiden Ankerschienen sind während bzw. nach einem bauseitigen Positionieren mit zumindest einer zuvor beschriebenen Verbindungsanordnung miteinander verbindbar. Die Verbindungsanordnung ist dabei insbesondere zug- und druckübertragend ausgebildet. Sie selbst als auch ihre jeweilige Anordnung an der ersten und/oder an der zweiten Ankerschiene kann ferner verwindungssteif ausgestaltet sein. Auf diese Art und Weise wird es ermöglicht, dass lediglich zum Beispiel das erste Betonfertigteil gesondert gegen Umfallen abzustützen ist, während das zweite Betonfertigteil ohne gesonderte Abstützung, somit abstützungsfrei allein über das zuvor beschriebene Verbindungssystem mit dem ersten Betonfertigteil verbunden ist.

In einem weiteren Aspekt betrifft die Erfindung ferner ein Verfahren zum Verbinden eines ersten Betonfertigteils mit zumindest einem zweiten Betonfertigteil. Das Verfahren weist dabei die folgenden Schritte auf:
- Bereitstellen des ersten Betonfertigteils mit zumindest einer ersten darin verankerten Ankerschiene,
- Bereitstellen eines zweiten Betonfertigteils mit zumindest einer zweiten darin verankerten Ankerschiene,
- Verbinden von erstem und zweitem Betonfertigteil mittels zumindest einer zuvor beschriebenen Verbindungsanordnung, indem der erste Kopf der Verbindungsanordnung in die erste Ankerschiene und indem der zweite Kopf der Verbindungsanordnung in die zweite Ankerschiene eingeführt wird.

Das Einführen zumindest einer der Köpfe in die jeweiligen Ankerschienen kann hierbei vor, während, als auch nach dem Aufstellen bzw. Positionieren von erstem und/oder zweitem Betonfertigteil erfolgen. Typischerweise kann vorgesehen sein, dass die Verbindungsanordnung mit ihrem ersten Kopf bereits vor oder nach einem Positionieren des ersten Betonfertigteils in die erste Ankerschiene eingeführt und in einer vorgegebenen Position an der ersten Ankerschiene vorfixiert wird.

Die Positionierung und Fixierung der Verbindungsanordnung an der ersten Ankerschiene ist derart, dass das zweite Betonfertigteil direkt in eine vorgegebene Endmontageposition bringbar ist, in welcher der zweite Kopf der Verbindungsanordnung direkt in die zweite Ankerschiene eingeführt ist. Das Einführen des zweiten Kopfes in die zweite Ankerschiene erfolgt sozusagen mit Positionieren des zweiten Betonfertigteils relativ zum ersten Betonfertigteil. Typischerweise weist die zweite Ankerschiene zur Aufnahme des zweiten Kopfs eine Schlitzverbreiterung auf. Mit dem soeben beschriebenen Einführen des zweiten Kopfs in die zweite Ankerschiene ist der Kopf demgemäß noch nicht axial an der zweiten Ankerschiene fixiert.

Eine Fixierung der Verbindungsanordnung an der zweiten Ankerschiene kann durch eine Längsverschiebung der Verbindungsanordnung in Richtung der Längserstreckung der zweiten Ankerschiene erfolgen. Hierfür wird typischerweise die Vorfixierung der Verbindungsanordnung an der ersten Ankerschiene gelöst. Alsdann kann die Verbindungsanordnung entlang der Längserstreckung beider, sich typischerweise parallel zueinander erstreckender Ankerschienen bewegt werden, bevor zumindest einer, bevorzugt beide Köpfe der Verbindungsanordnung druck- und zugkraftübertragend mit der jeweiligen Ankerschiene, das heißt mit der ersten bzw. mit der zweiten Ankerschiene verbunden wird bzw. werden.

### Kurzbeschreibung der Figuren

Weitere Merkmale, Ziele sowie vorteilhafte Ausgestaltungen der vorliegenden Erfindung werden in der nachfolgenden Beschreibung eines Ausführungsbeispiels erläutert. Hierbei zeigen:
- Fig. 1: eine Querschnittsdarstellung durch ein Gebäude mit einem als Betonfertigteil ausgestalteten Wandelement,
- Fig. 2: eine Draufsicht von oben auf zwei mittels des Verbindungssystems miteinander verbundene Betonfertigteile,
- Fig. 3: eine vergrößerte Darstellung des Verbindungssystems gemäß Fig. 2,
- Fig. 4: eine isolierte Draufsicht auf eine erste Ankerschiene,
- Fig. 5: eine isolierte Draufsicht auf eine zweite Ankerschiene,
- Fig. 6: eine perspektivische ausschnittsweise Darstellung der die erste und die zweite Ankerschiene miteinander verbindenden Verbindungsanordnung,
- Fig. 7a: eine schematische Darstellung der an einem ersten Betonfertigteil vormontierten Verbindungsanordnung während des Positionierens eines zweiten Betonfertigteils,
- Fig. 7b: eine schematische Darstellung der in die zweite Ankerschiene eingeführten Verbindungsanordnung,
- Fig. 7c: eine Endmontagestellung der Verbindungsanordnung an den Ankerschienen der beiden Betonfertigteile und
- Fig. 8: ein Flussdiagramm zur Beschreibung des erfindungsgemäßen Verbindungs- und Montageverfahrens.

### Detaillierte Beschreibung

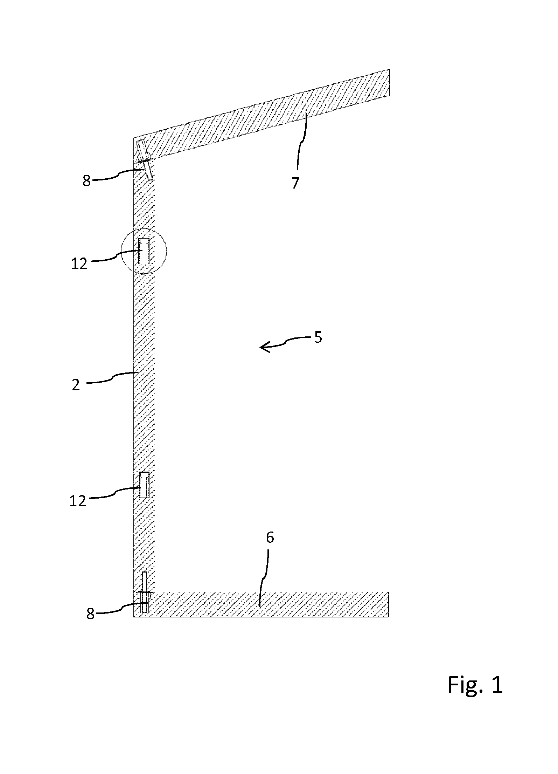

In Fig. 1 ist ein mit Betonfertigteilen zu errichtendes Gebäude 5 stark vereinfacht und schematisch dargestellt. Das Gebäude 5 weist ein als Bodenplatte ausgestaltetes Betonfertigteil 6, ein als Wandelement ausgestaltetes Betonfertigteil 2 sowie ein als Dach ausgestaltetes schräg zum Betonfertigteil 2 angeordnetes Betonfertigteil 7 auf.

Im Bereich des als Wandelement ausgestalteten Betonfertigteils 2 sind dem Betrachter zugewandt, das heißt im Bereich eines Seitenrands, zwei vertikal voneinander beabstandete Ankerschienen 12 angeordnet. Die Ankerschienen 12 sind typischerweise in das Betonfertigteil 2 eingelassen bzw. in dieses eingegossen und dementsprechend im Betonfertigteil 2 verankert. Für die Befestigung des Betonfertigteils 2 am als Bodenplatte ausgestalteten Betonfertigteil 6 ist eine Eckverbindungsanordnung 8 vorgesehen. Eine hiermit vergleichbare Eckverbindungsanordnung 8 ist im Übergangsbereich zwischen dem als Wandelement ausgestalteten Betonfertigteil 2 und dem als Dach oder Decke ausgestalteten Betonfertigteil 7 vorgesehen.

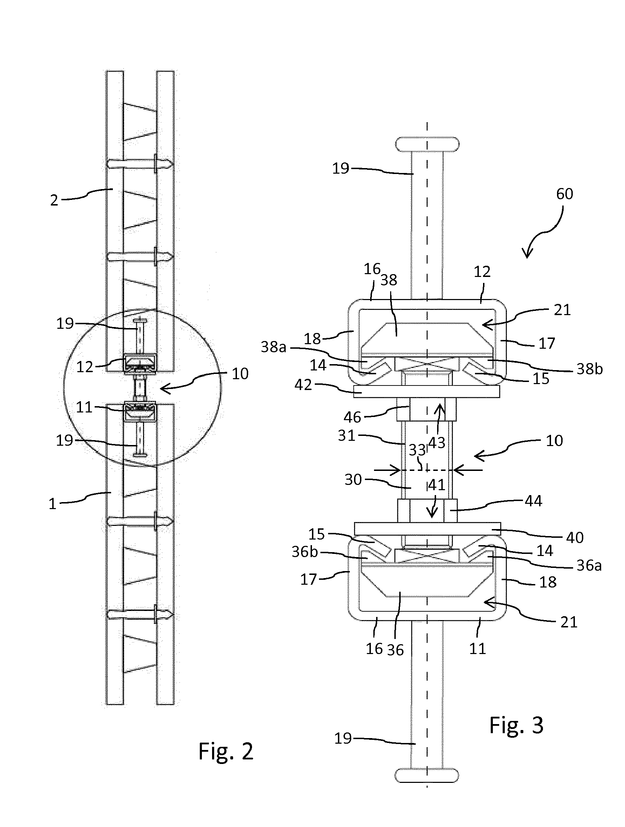

In Fig. 2 ist das nach der Erfindung vorgesehene Verbindungssystem 60 zur Verbindung zweier aneinander angrenzender Betonfertigteile 1, 2 im Querschnitt bzw. in einer Draufsicht von oben gezeigt. Das Verbindungssystem 60 weist eine erste Ankerschiene 11 sowie eine zweite Ankerschiene 12 auf. Die erste Ankerschiene 11 ist im ersten Betonfertigteil 1 verankert, während die zweite Ankerschiene 12 im zweiten Betonfertigteil 2 verankert ist. Die beiden Ankerschienen 11, 12 sind ferner mit einer Verbindungsanordnung 10 gekoppelt, die im Detail unter Bezugnahme auf die vergrößerte Darstellung gemäß Fig. 3 beschrieben ist.

Die Verbindungsanordnung 10 bzw. das Verbindungssystem ist insbesondere zum Verbinden von aufgestellten und als Wandelement ausgestalteten Betonfertigteilen 1, 2 ausgebildet. Die Ankerschienen 11, 12 sind in den aneinander zugewandten Seitenrändern, mithin in den seitlichen Stirnflächen der Betonfertigteile 1, 2 verankert bzw. ggf. auch flächenbündig in diese eingebettet. Die Ankerschienen 11, 12 weisen zum Zwecke der Verankerung in das jeweilige Betonfertigteil 1, 2 zumindest einen oder mehrere in Längsrichtung der jeweiligen Ankerschiene voneinander beabstandete Ankerabschnitte 19 mit einem radial verbreiterten Ende auf.

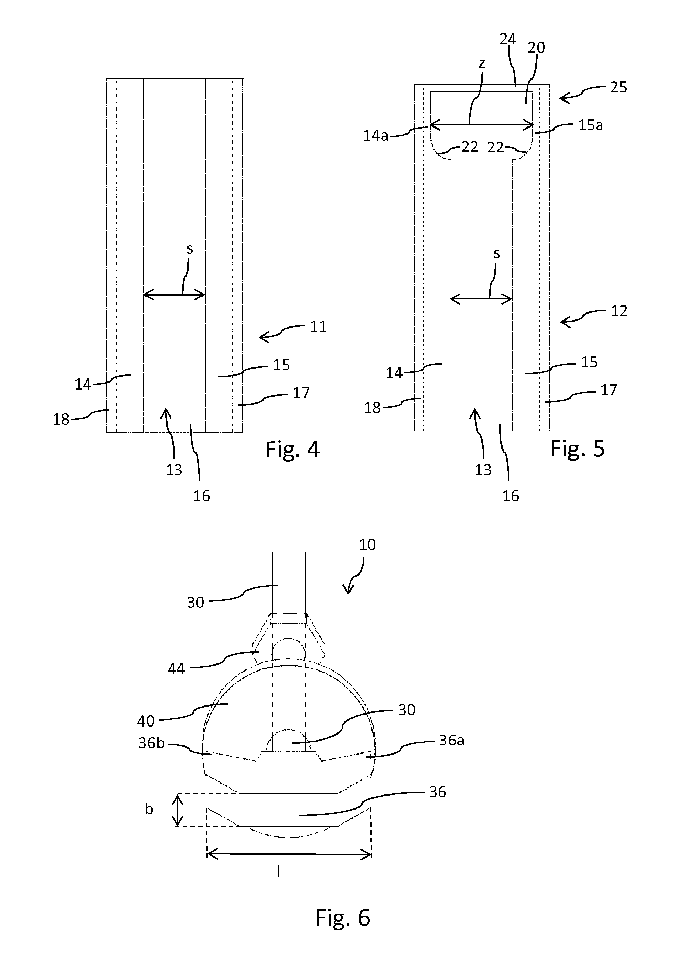

Die Verbindungsanordnung 10 ist in Fig. 3 mit der ersten und mit der zweiten Ankerschiene 11, 12 in Eingriff stehend gezeigt. Sie weist einen längserstreckten Schaft 30 auf, der zumindest abschnittsweise oder sogar vollständig mit einem Außengewinde 31 versehen ist. An einem ersten Längsende 32 des Schafts 30 ist ein erster, bezogen auf den Schaft 30 radial verbreiterter Kopf 36 angeordnet. Gegenüberliegend, das heißt am gegenüberliegenden Längsende 34 ist ein zweiter verbreiterter Kopf 38 vorgesehen. Erster und zweiter Kopf 36, 38 weisen vorliegend einen in etwa rechteckigen Querschnitt in einer Ebene senkrecht zur Axialrichtung oder Längserstreckung des Schafts 30 auf, wie dies zum am Beispiel des Kopfes 36 in den Fig. 6 dargestellt ist.

Zumindest einer der Köpfe 36, 38 oder sogar beide Köpfe 36, 38 sind starr bzw. fest mit dem Schaft 30 verbunden. Ein auf den ersten oder zweiten Kopf 36, 38 einwirkendes Drehmoment mit dem Schaft 30 als Drehachse führt zu einer dementsprechenden Drehbewegung des jeweils anderen Kopfs 38, 36. Erster und zweiter Kopf 36, 38 weisen eine Länge (I) auf, die größer ist als die sich hierzu senkrecht erstreckende Breite (b).

Die Breite (b) von erstem und zweitem Kopf 36, 38 ist typischerweise kleiner als die Breite (s) eines Führungsschlitzes 13 von erster und zweiter Ankerschiene 11, 12, wie diese in den Fig. 4 und 5 dargestellt sind. Zumindest einer von erstem und zweiten Kopf 36, 38 weist in der sich senkrecht zum Schaft erstreckenden Ebene einen Querschnitt auf, welcher größer ist als der Schaftdurchmesser 33. Der Schaftdurchmesser 33 ist generell kleiner als die lichte Breite (s) oder Weite des Führungsschlitzes 13. Auf diese Art und Weise kann der entsprechende Kopf 36, 38 in einer parallelen Ausrichtung zum Führungsschlitz 13 in den Führungsschlitz 13 eingesetzt und mit Erreichen einer Einführposition um einen vorgegebenen Winkel bezüglich des Schafts 30, so etwa um 90° gedreht werden. So kann zum Beispiel der erste Kopf 36 axial gegen ein Herausziehen aus der ersten Ankerschiene 11 gesichert werden. Eine Unterseite des verbreiterten Kopfs 36, wie zum in Fig. 3 gezeigt, kann mit Haltenocken 36a, 36b versehen sein, mit welchen sie mit der Innenseite gegenüberliegender Schenkelabschnitte 14, 15 der ersten Ankerschiene 11 zur Anlage bzw. in Eingriff bringbar ist.

Die Kontur der Haltenocken 36a, 36b kann hierbei an die nach innen bzw. zum Bodenabschnitt 16 der ersten Ankerschiene 11 ragenden freien Enden der Schenkelabschnitte 14, 15 angepasst sein, sodass sich hier eine möglichst voll- oder großflächige wechselseitige Anlagestellung ergibt, mittels derer axiale Kräfte möglichst gut und gleichmäßig zwischen der Verbindungsanordnung 10 und der betreffenden Ankerschiene 11, 12 übertragen bzw. abgefangen werden können.

Die erste Ankerschiene 11 weist ein annähernd rechteckiges Querschnittsprofil auf. Sie weist einen in etwa geradlinigen Bodenabschnitt 16 auf, an dessen Seiten sich Wangenabschnitte 17, 18 in etwa senkrecht zum Bodenabschnitt 16 erstrecken. An den dem Bodenabschnitt 16 abgewandten Enden der Wangenabschnitte 17, 18 sind die nach innen bzw. die aufeinander zu gewandten Schenkelabschnitte 14, 15 angeordnet. Diese können in etwa parallel zum Bodenabschnitt 16 verlaufen, oder aber auch, wie zum Beispiel in Fig. 3 dargestellt, leicht geneigt zum Bodenabschnitt 16 ragen. Zwischen den freien Enden der einander zugewandten Schenkelabschnitte 14, 15 erstreckt sich der Führungsschlitz 13. Die Breite s des Führungsschlitzes 13 ist größer als die Breite b der Köpfe 36, 38, aber schmaler als die Länge I der Köpfe 36, 38.

Jedem der Köpfe 36, 38 ist im vorliegenden Ausführungsbeispiel ferner jeweils ein Abstützelement 40, 42 zugeordnet. Das erste Abstützelement 40 kommt in der in Fig. 3 angedeuteten Endmontagekonfiguration außerhalb der ersten Ankerschiene 11 zu liegen. Es stützt sich axial an den axial außenliegenden Abschnitten der Schenkelabschnitte 14, 15 ab. Das erste Abstützelement 40 ist gleichermaßen, wie auch das zweite Abstützelement 42 entlang dem Schaft 30 beweglich.

Im gezeigten Ausführungsbeispiel weisen die Abstützelemente 40, 42 jeweils ein zentrales Durchgangsloch 41 auf, durch welches sich der Schaft 30 erstreckt. In der sich in Radialrichtung zum Schaft 30 erstreckenden Ebene weisen das erste als auch das zweite Abstützelement 40, 42 eine scheibenartige radialsymmetrische Geometrie auf. Zusätzlich zu den Abstützelementen 40, 42 sind auch erste und zweite Fixierelemente 44, 46 vorgesehen. Vorliegend sind die Fixierelemente 44, 46 als Schraubenmutter ausgebildet, die mit dem Außengewinde 31 des Schafts 30 in Wirkverbindung stehen. Mittels der Fixierelemente 44, 46 kann zwischen den Abstützelementen 40, 42 und den zugehörigen Köpfen 36, 38 eine axiale Klemmwirkung erzeugt werden.

So können beispielsweise die radial nach innen zum Schaft 30 ragenden Schenkelabschnitte 14, 15 der ersten Ankerschiene 11 als auch der zweiten Ankerschiene 12 axial zwischen dem ersten Abstützelement 40 und dem ersten Kopf 36, d.h. bezogen auf die zweite Ankerschiene 12, zwischen dem zweiten Abstützelement 42 und dem zweiten Kopf 38 eingeklemmt werden. Mittels den entlang dem Schaft 30 verstellbaren Fixierelementen 44, 46 kann jeder der beiden Köpfe 36, 38 axial als auch radial, das heißt bezüglich der Längsrichtung der ersten bzw. zweiten Ankerschiene 11, 12 an der betreffenden Ankerschiene 11, 12 gesichert und fixiert werden. Auf diese Art und Weise kann eine kraftübertragende als auch zug- und drucksteife Verbindung zwischen den in ersten und zweiten Betonfertigteilen 1, 2 verankerten Ankerschienen 11, 12 realisiert werden.

Mittels der Ausgestaltung von Haltenocken 36a, 36b am ersten Kopf 36 als auch mittels Haltenocken 38a, 38b am zweiten Kopf 38 und den sich zumindest geringfügig in Axialrichtung zum jeweiligen Bodenabschnitt 16 erstreckenden Schenkelabschnitten 14, 15 von erster Ankerschiene 11 und zweiter Ankerschiene 12 kann eine besonders gute Klemmwirkung erreicht werden, die zum Beispiel auch mit einer geringfügigen plastischen oder elastischen Verformung der geneigten Schenkelabschnitte 14, 15 einhergehen kann.

In der hier gezeigten Ausführungsform mit zumindest erster und zweiter Ankerschiene 11, 12 und einer die Ankerschienen 11, 12 miteinander koppelnden Verbindungsanordnung 10 sind die erste und die zweite Ankerschiene 11, 12 unterschiedlich ausgestaltet, wie dies anhand der Darstellungen der Fig. 4 und 5 deutlich wird. Die erste Ankerschiene 11 weist in Längsrichtung ein kontinuierliches Querschnittsprofil auf, wie dies im Querschnitt in Fig. 3 gezeigt ist. In Abwandlung hiervon weist die zweite Ankerschiene 12 an einem Endabschnitt eine Schlitzverbreiterung 20 auf.

Der in etwa mit dem Führungsschlitz 13 der ersten Ankerschiene 11 korrespondierende Führungsschlitz 13 der zweiten Ankerschiene 12 geht, wie in der Darstellung nach Fig. 5 gezeigt, an einem oberen Ende der zweiten Ankerschiene 12 in einen, bezogen auf die Ausrichtung des Schafts in eine radiale Schlitzverbreiterung 20 über. Die Breite (z) der Schlitzverbreiterung 20 ist hierbei typischerweise größer als die Länge I des zweiten Kopfs 38. Insoweit kann der zweite Kopf 38 auch in Querrichtung, das heißt in einer senkrecht zur Längserstreckung der zweiten Ankerschiene 12 ausgerichteten Stellung axial in die Schlitzverbreiterung 20 eingesetzt werden.

Der zweite Kopf 38 gelangt hierbei gleichermaßen zwischen die gegenüberliegenden Wangenabschnitte 17, 18 der zweiten Ankerschiene 12. Durch eine Verschiebung des zweiten Kopfs 38 in Längsrichtung der zweiten Ankerschiene 12 gelangt der zweite Kopf 38 in den gegenüber der Schlitzverbreiterung 20 verjüngten Führungsschlitz 13, in welchem der zweite Kopf 38 die beiden gegenüberliegenden Schenkelabschnitte 14, 15 der zweiten Ankerschiene 12 hintergreift.

Wie bereits unter Bezugnahme auf den ersten Kopf 36 beschrieben, kann auch der zweite Kopf 38 mittels dem zweiten Abstützelement 42 und dem zweiten Fixierelement 46 klemmend an der zweiten Ankerschiene 12 fixiert werden. Der Übergang 22 von der Schlitzverbreiterung 20 in den geradlinigen, aber verengten Führungsschlitz 13 ist vorliegend gewölbt ausgebildet. Anstelle einer Wölbung kann der Übergang 22 aber auch eine eckigen Absatz oder eine im Wesentlichen geradlinige Schräge aufweisen.

Das in Fig. 5 obenliegende Längsende 25 der zweiten Ankerschiene 12 ist, wie in Fig. 5 gezeigt, ferner mit einer Stirnwand 24 versehen, die einen von Bodenabschnitt 16, Wangenabschnitten 17, 18 und den beiden ausgesparten Schenkelabschnitten 14a, 15a gebildeten Innenraum 21 der zweiten Ankerschiene 12 in Längsrichtung der zweiten Ankerschiene 12 verschließt oder abschließt. Eine derartige Stirnwand 24 ist insbesondere für den flächenbündigen Einbau in ein Betonfertigteil 1, 2 von Vorteil. So kann beim Gießen des Betonfertigteils 1, 2 kein Beton in den Innenraum 21 der zweiten Ankerschiene 12 eindringen. Auf diese Art und Weise bleibt der Innenraum 21 zur Aufnahme des zweiten Kopfs 38 frei.

Gleichermaßen kann auch die erste Ankerschiene eine entsprechende, vorliegend nicht explizit gezeigte Stirnwand aufweisen. Diese kann zudem eine definierte Vormontagestellung, bzw. einen Längsanschlag für den an der ersten Ankerschiene vormontierbaren Kopf bereitstellen.

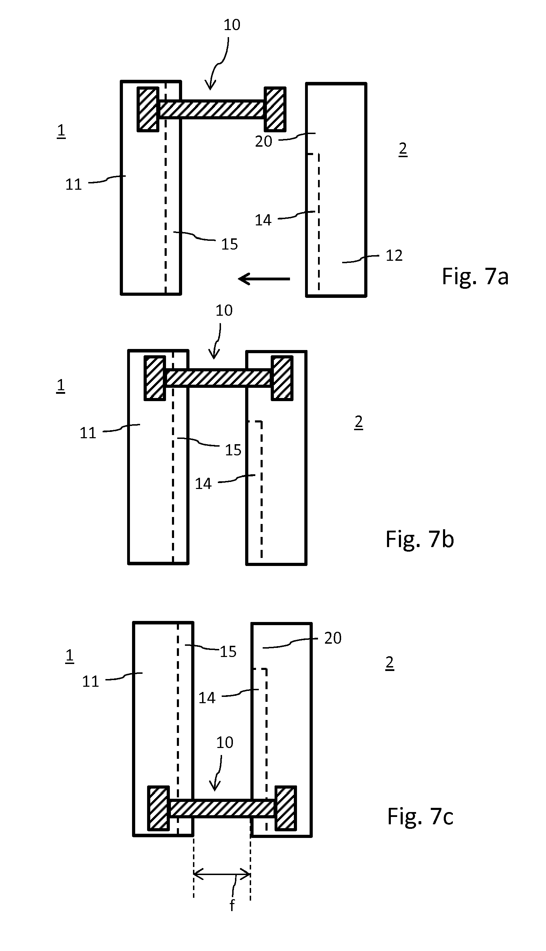

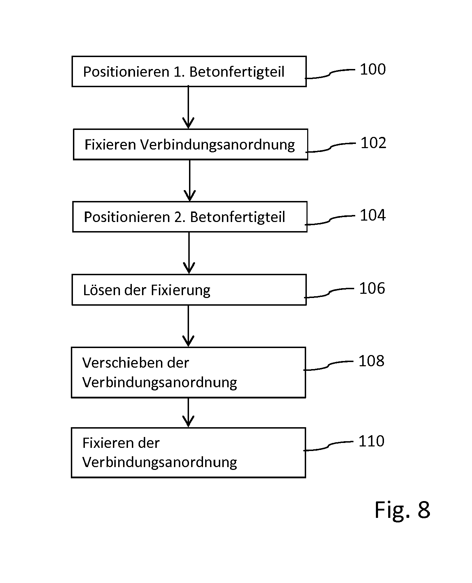

Unter Bezugnahme auf die schematische Darstellung der Fig. 7a bis 7c sowie dem Flussdiagramm der Fig. 8 wird nachfolgend ein typisches Montageszenario zum Verbinden von zumindest zwei Betonfertigteilen 1, 2 beschrieben. Das erste Betonfertigteil 1, typischerweise in Form eines Wandelements, wird in einem ersten Schritt 100 bereitgestellt und bauseits positioniert. Das erste Betonfertigteil 1 ist mit zumindest einer ersten Ankerschiene 11 versehen.

Nach oder bereits vor dem Positionieren des ersten Betonfertigteils 1 wird eine Verbindungsanordnung 10 mit ihrem ersten Kopf 36 in die Ankerschiene 11 eingesetzt. Der erste Kopf 36 kann aber auch bereits vor einem Einbetten der ersten Ankerschiene 11 in das Betonfertigteil 1, sozusagen beim Gießen des ersten Betonfertigteils in die Ankerschiene 11 eingesetzt sein oder anderweitig an dieser verschiebbar positioniert bzw. fixiert sein. In einem nachfolgenden Schritt 102 wird die Verbindungsanordnung 10 an einer vorgegebenen Stelle der ersten Ankerschiene 11, typischerweise an einem oberen Endabschnitt der ersten Ankerschiene 11 fixiert. Jene Fixierung kann typischerweise unter Zuhilfenahme des ersten Abstützelements 40 und des ersten Fixierelements 44 erfolgen.

Hiernach wird in einem nächsten Schritt 104, wie dies aus dem Vergleich der Fig. 7a und 7b hervorgeht, ein mit dem ersten Betonfertigteil 1 korrespondierendes zweites Betonfertigteil 2 in Endmontageposition verbracht. Die am zweiten Betonfertigteil 2 vorgesehene Ankerschiene 12 ist hierbei derart in das zweite Betonfertigteil 2 eingebettet bzw. derart an diesem verankert, dass mit Erreichen der in Fig. 7b gezeigten Endmontageposition der zweite Kopf 38 in der Schlitzverbreiterung 20 zu liegen kommt bzw. über die zweite Schlitzverbreiterung 20 in den Innenraum 21 der zweiten Ankerschiene 12 gelangt.

Durch ein Lösen der Fixierung des ersten Kopfs 36 an der ersten Ankerschiene 11 im Schritt 106 ist die Verbindungsanordnung 10 sowohl gegenüber der ersten Ankerschiene 11 als auch gegenüber der zweiten Ankerschiene 12 längs beweglich. Die Verbindungsanordnung kann alsdann, unterstützt von der Schwerkraft in eine in Fig. 7c angeordnete Endmontagekonfiguration am unteren Ende von erster und zweiter Ankerschiene 11, 12 verbracht werden. In jener Position ist der erste Kopf 36 mit den Schenkelabschnitten 14, 15 der ersten Ankerschiene in Eingriff. Gleichermaßen ist auch der zweite Kopf 38 mit den Schenkelabschnitten 14, 15 der zweiten Ankerschiene 12 in Eingriff. In der in Fig. 7c gezeigten Endmontagestellung der Verbindungsanordnung 10 kann der erste Kopf 36 wiederum mit der ersten Ankerschiene 11 unter Zuhilfenahme des ersten Abstützelements 40 und des ersten Fixierelements 44 starr gekoppelt werden.

Gleichermaßen kann auch der zweite Kopf 38 mittels zugehörigem zweiten Abstützelements 42 und mittels zweitem Fixierelement 46 klemmend mit den Schenkelabschnitten 14, 15 der zweiten Ankerschiene 12 in Wirkverbindung gebracht werden. Insoweit stellen die beiden Ankerschienen 11, 12 mit der Verbindungsanordnung 10 ein druck- und zugstabiles Verbindungssystem 60 zwischen den beiden Betonfertigteilen 1, 2 her.

Die Längsverschiebung der Verbindungsanordnung 10 entlang der ersten Ankerschiene 11 und der zweiten Ankerschiene 12 erfolgt im Schritt 108. Hiernach kann im Schritt 110 zumindest einer von erstem und zweitem Kopf 36, 38 mit zumindest einer der betreffenden Ankerschienen 11, 12 starr verbunden werden. Vorzugsweise werden im Schritt 110 beide Köpfe 36, 38 druck- und zugkraftübertragend mit den ersten und zweiten Ankerschienen 11, 12 unter Zuhilfenahme von erstem und zweitem Fixierelement 44, 46 im Schritt 110 starr verbunden.

Das nach dem vorliegenden Ausführungsbeispiel implementierte Verbindungssystem 60 ermöglicht ein besonders kleines Spaltmaß (f) zwischen den Betonfertigteilen 1, 2. Die Breite (f) der unweigerlich entstehenden Fuge zwischen dem ersten und dem zweiten Betonfertigteil 1, 2 kann hierbei kleiner als 20 mm sein und typischerweise in einem Bereich zwischen 10 und 15 mm liegen. Die Ausgestaltung der Fixierelemente 44, 46 in Form von Schraubenmuttern mit radial außenliegenden Schlüsselflächen ermöglicht ein einfaches sowie intuitives Fixieren der Verbindungsanordnung 10 bzw. deren ersten und/oder zweiten Kopfes 36, 38 an erster und/oder zweiter Ankerschiene 11, 12.

Mittels des druck- und zugfesten Verbindungssystems 60 können Wandaufbauten aus mehreren nebeneinander zu positionierenden Betonfertigteilen 1, 2 besonders einfach und rationell installiert bzw. montiert werden. Durch die druck- und zugfeste Verbindung ist es fortan möglich, lediglich eines oder nur einige wenige Betonfertigteile, so zum Beispiel lediglich ein erstes Betonfertigteil 1 gegen Umfallen zu stützen und abzusichern, während ein mittels des Verbindungssystems 60 mit dem ersten Betonfertigteil 1 verbundenes zweites Betonfertigteil 2 ausschließlich über das Verbindungssystem mit dem ersten Betonfertigteil 1 in Position gehalten und gegen Umfallen gesichert werden kann.

Das zweite Betonfertigteil 2 kann insoweit an das erste Betonfertigteil 1 angehängt werden. Auch können weitere Betonfertigteile an das zweite Betonfertigteil 2 in gleicher Art und Weise angehängt bzw. mit dem zweiten Betonfertigteil verbunden werden. Der Aufwand zum Abstützen und Absichern einzelner Betonfertigteile 1, 2 kann hierdurch deutlich minimiert werden. Durch die besonders schmale Fuge zwischen den Betonfertigteilen 1, 2 kann ein Abschalen der Fugen zum Verfüllen derselben mit Gießmasse entbehrlich werden. Es ist denkbar, die verbleibenden Fugen lediglich mit ausreichend formstabilen Füllmassen auszuspritzen.

### Bezugszeichenliste

- 1: Betonfertigteil
- 2: Betonfertigteil
- 5: Gebäude
- 6: Betonfertigteil
- 7: Betonfertigteil
- 8: Eckverbindungsanordnung
- 10: Verbindungsanordnung
- 11: Ankerschiene
- 12: Ankerschiene
- 13: Führungsschlitz
- 14: Schenkelabschnitt
- 14a: Schenkelabschnitt
- 15: Schenkelabschnitt
- 15a: Schenkelabschnitt
- 16: Bodenabschnitt
- 17: Wangenabschnitt
- 18: Wangenabschnitt
- 19: Ankerabschnitt
- 20: Schlitzverbreiterung
- 21: Innenraum
- 22: Übergang
- 24: Stirnwand
- 25: Längsende
- 30: Schaft
- 31: Außengewinde
- 32: Erstes Längsende
- 33: Schaftdurchmesser
- 34: Zweites Längsende
- 36: Kopf
- 36a: Haltenocken
- 36b: Haltenocken
- 38: Kopf
- 38a: Haltenocken
- 38b: Haltenocken
- 40: Abstützelement
- 41: Durchgangsloch
- 42: Abstützelement
- 43: Durchgangsloch
- 44: Fixierelement
- 46: Fixierelement
- 60: Verbindungssystem

## Patentansprüche

1. Verbindungsanordnung zum Verbinden von zumindest zwei, jeweils mit zumindest einer Ankerschiene (11, 12) versehenen Betonfertigteilen (1, 2), wobei die Verbindungsanordnung (10) einen längserstreckten Schaft (30) mit einem an einem ersten Längsende (32) angeordneten und gegenüber dem Schaftdurchmesser (33) verbreiterten ersten Kopf (36) sowie an einem zweiten Längsende (34) des Schafts (30), welches dem ersten Längsende (32) gegenüberliegt, einen gegenüber dem Schaftdurchmesser (33) verbreiterten zweiten Kopf (38) aufweist.

2. Verbindungsanordnung nach Anspruch 1, wobei zumindest einer von erstem und zweitem Kopf (36, 38) in einer senkrecht zum Schaft (30) verlaufenden Querschnittsebene eine Länge (I) aufweist, die größer ist als eine sich hierzu senkrecht in der Querschnittsebene erstreckende Breite (b).

3. Verbindungsanordnung nach einem der vorhergehenden Ansprüche, wobei zumindest einem der Köpfe (36; 38) ein entlang dem Schaft (30) verschiebbares Abstützelement (40, 42) zugeordnet ist.

4. Verbindungsanordnung nach Anspruch 3, wobei das zumindest eine Abstützelement (40, 42) als Scheibe mit einem Durchgangsloch (41, 43) zur Aufnahme des Schafts (30) ausgebildet ist.

5. Verbindungsanordnung nach einem der vorhergehenden Ansprüche, welche ferner zumindest ein entlang dem Schaft (30) bewegliches und am Schaft (30) fixierbares Fixierelement (44, 46) aufweist.

6. Verbindungsanordnung nach Anspruch 5, wobei das zumindest eine Fixierelement (44, 46) als Schraubenmutter ausgebildet ist und mit einem Außengewinde (31) des Schafts (30) zusammenwirkt.

7. Verbindungsanordnung nach einem der vorhergehenden Ansprüche 4 und 5 oder 6, wobei dem ersten Kopf (36) ein erstes Abstützelement (40) mit einem ersten Fixierelement (44) zugeordnet ist und wobei dem zweiten Kopf (38) ein zweites Abstützelement (42) mit einem zweiten Fixierelement (46) zugeordnet ist.

8. Verbindungsanordnung nach einem der vorhergehenden Ansprüche, wobei der Schaft (30) zug- und druckstabil ausgebildet ist.

9. Verbindungssystem zum Verbinden von zumindest zwei Betonfertigteilen (1, 2), mit:
- einer in oder an einem ersten Betonfertigteil (1) verankerbaren ersten Ankerschiene (11),
- einer in oder an einem zweiten Betonfertigteil (2) verankerbaren zweiten Ankerschiene (12), und mit
- einer Verbindungsanordnung nach einem der vorhergehenden Ansprüche, deren erster Kopf (36) in die erste Ankerschiene (11) einführbar ist und deren zweiter Kopf (38) in die zweite Ankerschiene (12) einführbar ist.

10. Verbindungssystem nach Anspruch 9, wobei die erste Ankerschiene (11) und die zweite Ankerschiene (12) jeweils einen sich zwischen zwei nach innen ragenden Schenkelabschnitten (14, 15) erstreckenden Führungsschlitz (13) aufweisen, dessen Schlitzbreite (s) kleiner ist als ein Querschnitt des ersten und des zweiten Kopfs (36, 38).

11. Verbindungssystem nach einem der vorhergehenden Ansprüche, wobei der Führungsschlitz (13) der zweiten Ankerschiene (12) an zumindest einem Abschnitt eine Schlitzverbreiterung (20) aufweist, deren Breite (v) größer ist als ein Querschnitt des zweiten Kopfs (38).

12. Verbindungssystem nach Anspruch 11, wobei die Schlitzverbreiterung (20) der zweiten Ankerschiene (12) an einem Längsende (25) der zweiten Ankerschiene (12) ausgebildet ist.

13. Verbindungssystem nach Anspruch einem der vorhergehenden Ansprüche, wobei die Verbindungsanordnung (10) mit zumindest einem ihrer Köpfe (11, 12) an der ersten und/oder an der zweiten Ankerschiene (11, 12) fixierbar ist.

14. Betonfertigteilanordnung mit zumindest einem ersten Betonfertigteil (1) und mit einem zweiten Betonfertigteil (2), die mittels zumindest eines Verbindungssystems (3) nach einem der vorhergehenden Ansprüche 9 bis 13 miteinander verbunden sind.

15. Verfahren zum Verbinden eines ersten Betonfertigteils (1) mit zumindest einem zweiten Betonfertigteil (2), mit den Schritten:
- Bereitstellen des ersten Betonfertigteils (1) mit zumindest einer ersten darin verankerten Ankerschiene (11),
- Bereitstellen eines zweiten Betonfertigteils (2) mit zumindest einer zweiten darin verankerten Ankerschiene (12),
- Verbinden von erstem und zweitem Betonfertigteil (1, 2) mittels zumindest einer Verbindungsanordnung (10) nach einem der vorhergehenden Ansprüche 1 bis 9, mittels Einführen des ersten Kopfs (36) in die erste Ankerschiene (11) und mittels Einführen des zweiten Kopfs (38) in die zweite Ankerschiene (12).
